# EUROPEAN PATENT SPECIFICATION

(11) **EP 3 543 124 B1**
(45) Date of publication and mention of the grant of the patent: **17.01.2024**
(21) Application number: 18163756.2
(22) Date of filing: 23.03.2018
(51) Int. Cl.: B64D 11/06, B60N 2/56, B60N 2/58, B60N 2/90

(54) **UPHOLSTERY MODULE**
POLSTERUNGSMODUL
MODULE DE REMBOURRAGE

(43) Date of publication of application: 25.09.2019
(73) Proprietor: Adient Aerospace, LLC, Bothell, WA 98011 (US)
(72) Inventor: Weingart, Andreas, 67700 Niederkirchen (DE); Kreutz, Wolfgang, 66879 Reichenbach-Steegen (DE)
(74) Representative: Arnold & Siedsma

(56) References cited:
- DE-A1-102009 006 759
- US-A1- 2010 026 077
- US-A1- 2010 171 346
- US-A1- 2014 203 599
- US-A1- 2015 036 060

## Description

The present invention refers to an upholstery module for a seat, in particular for a vehicle seat, such as an aircraft seat.

### DESCRIPTION OF THE RELATED ART

There are a wide variety of upholsteries for vehicle seats, in particular aircraft passenger seats known in the prior art.

For example, US 3,762,766 A describes a seat assembly which can readily be adjusted to accommodate occupants of varying height. The seat includes an air bag which can be deflated as desired. Further, the seat includes a generally pan-like metal base receiving the air bag and which is fully surrounded by upholstery covers.

Further, US 2010/0148552 A1 describes a seat cushion for an aircraft seat including a plurality of rear edge securing straps attached to a lower surface of the seat cushion. The rear edge securing straps each have a free end that includes a pull-the-dot fastener that engages a corresponding pull-the-dot fastener at the rear edge of a seat pan.

DE 10 2009 006 759 A1 discloses a cover for a seat with a detachable portion.

### SUMMARY OF THE INVENTION

It is an object of the present invention to improve an assembly and disassembly of an upholstery module for a seat, in particular for a vehicle seat, such as an aircraft seat. Further, an object of the present invention is to increase comfort to a passenger in any position of the seat.

The object is achieved by an upholstery module for a seat according to claim 1. Further, the object is achieved by a seat comprising such an upholstery module according to claim 15.

Preferred embodiments of the invention are given in the dependent claims.

The present invention provides an upholstery module for a seat, in particular for a vehicle seat, such as an aircraft seat, comprising at least an upholstery part forming at least one of a backrest upholstery part and a seat pan upholstery part. The upholstery part comprises at least a number of stacked comfort layers and a number of functional elements. Further, the upholstery part is detachably coupled to at least one support shell, wherein the support shell is detachably mounted at least partially to a seat support structure of the seat.

In particular, a seat frame assembly is understood by the term "seat support structure". For instance, the seat support structure comprises at least one of a seat pan frame, a backrest frame and a leg-rest frame. Further, the seat support structure can comprise a head support frame.

Exemplarily, maintenance service on the vehicle seat can only be performed when the vehicle is out of operation. In case of the aircraft seat, maintenance service can only be performed when the aircraft is on ground surface, i.e. during an intermediate stop, fuelling, luggage loading or unloading at an airport. In particular, a substantially rapid repair or exchange, exemplary, of defective functional components of the vehicle seat and seat support parts is desired. Therefore, the upholstery module according to the present invention is compactly and easily separable from the vehicle seat. Particularly, accessibility to the functional components of the vehicle seat for maintenance can be increased. Further, accessibility to the seat support parts, such as seat frame parts and adjustment devices of the seat, underneath the upholstery module is simplified.

Moreover, in case of maintenance on the upholstery module itself and, for example, on the stack of comfort layers within, the whole upholstery module can be easily removed from the vehicle seat. Particularly, the upholstery part comprising the stack of comfort layers can be quickly replaced. Especially, an assembly time and disassembly time can be reduced. Further, an out-of-operation-time can be effectively used, particularly reduced or at least kept at a minimum.

In another embodiment of the upholstery module, the support shell provides a substantially stable surface to support a mounting and a dismounting of the upholstery module from the vehicle seat. In particular, the support shell is a thin, stiff back-mounted plate of the upholstery module. For example, the support shell provides a function as a grip plate. Thereby, an assembler can easily grab the support shell to detachably mount or dismount the support shell from the seat support structure of the vehicle seat as well as from the upholstery part. For instance, the support shell is made of synthetic material, carbon fiber, metal material or made of any other sturdy material.

For instance, to detachably mount the whole upholstery module to the seat support structure, the support shell can be firstly mounted to the seat support structure followed by coupling the upholstery part to the support shell. Alternatively, the support shell can be firstly coupled to the upholstery part and afterwards mounted to the seat support structure as a complete upholstery module. Therefore, a stepwise assembly and disassembly is ensured.

According to an embodiment of the upholstery module, the upholstery part and the support shell are detachably coupled to each other by a number of detachable fixing elements, wherein the fixing elements are arranged between corresponding surfaces of the upholstery part and the support shell. In particular, the fixing elements are arranged between contacting and overlapping surface portions of the upholstery part and the support part. The fixing elements can comprise at least one of a clip element, a mechanical fastening element, such as a textile detachable strip or hook and loop fasteners, a snap-in element or any other detachable means. Those fixing elements are cost efficient whilst providing a strong fixation.

According to another embodiment of the upholstery module, the support shell is detachably mounted to the seat support structure by a number of detachable fixing elements, wherein the fixing elements are arranged between corresponding, particularly contacting and overlapping surfaces of the support shell and the seat support structure. The fixing elements can comprise at least one of a clip element, a mechanical fastening element, such as a textile detachable strip or hook and loop fasteners, a textile detachable strip and a snap-in element.

In a further embodiment of the upholstery module, the support shell is partially embedded in a recess of the upholstery part. Exemplarily, the recess in formed by a rear portion of the upholstery part. The rear portion is facing towards the seat support structure. Thereby, the recess can be formed by a rear comfort layer of the upholstery part. Further, all the comfort layers can be formed in such a manner that they are stacked one above the other each providing the recess. The support shell is at least partially surrounded by at least the rear comfort layer such that the support shell cannot affect a comfort feeling of the passenger. Furthermore, the upholstery part is stabilised by the support shell.

Exemplary, in another possible embodiment of the upholstery module, the support shell comprises a center portion and two lateral sides, wherein each of the two lateral sides forms bent edges. Particularly, the lateral sides are bent in a direction towards the seat support structure when mounted. That means that each of the lateral sides is bent along and partially surrounding an edge of the seat support structure, particularly an edge of the seat frame. Therefore, the lateral sides of the support shell can provide an L-shape and be detachably mounted to the sides of the seat support structure. Additionally or optionally, a back side or front side of the support shell forms bent edges to partially overlap back and front portions of the seat support structure. In particular, a positioning and alignment of the support shell to the seat support structure is simplified.

A further embodiment of the present invention provides the upholstery module, wherein each of the two lateral sides is formed as U-shaped portion which is opened towards a rear. In particular, each of the U-shaped portions provides a corresponding shape to lateral seat support sides. Thereby, the U-shaped portions are partially surrounding the lateral seat support sides. For example, each of the two lateral sides can comprise a U-shaped bracket. In particular, a positioning and alignment of the support shell to the seat support structure is simplified. The U-shaped portions can engage or snap-engage the lateral seat support sides. Furthermore, a fixation can be improved, wherein the U-shaped portions are framing the lateral seat support sides.

In another possible embodiment of the upholstery module, the center portion of the support shell comprises an indentation area, wherein at least one of a comfort element and functional element is arranged within the indentation area. For example, a foam block can be arranged in the indentation area to support the upholstery module on the seat support structure and increase comfort to the passenger. Additionally or optionally, spring elements and a lumbar support can be arranged in the indentation area providing additional suspension to the upholstery module. Particularly, the center portion of the support shell providing the indentation area is formed by forming U-shaped portions on sides of the center portion.

According to a further embodiment of the upholstery module, the indentation area is arranged within a space provided between two lateral seat support sides. In particular, the indentation area is embedded between the two lateral seat support sides and between a front and back seat support side. Thereby, when the comfort element and functional element is arranged within the indentation area, the upholstery part is kept flat and supported on the support shell. The upholstery part can be bolstered up in the center portion and by the U-shaped edges. Therefore, a better weight compensation of the passenger and more comfort feeling are optimised. Further, a service life of the upholstery part can be increased when being additionally supported on the seat support structure.

In an exemplary embodiment of the upholstery module, the support shell comprises a number of through holes to connect at least one of the functional elements of the upholstery part and the support shell with at least an external controlling device. In particular, the center portion of the support shell comprises a number of through holes. For example, the external controlling device is arranged on a rear side of the support shell. Therefore, the external controlling device does not affect the comfort feeling of the passenger. The external controlling device can comprise at least one of a valve block and a pump device for massage elements and lumbar functions of the upholstery module. For example, the through holes can be used to guide through a plug connector for connecting upholstery functional elements, such as massage elements and ventilation elements, to the controlling device and to an air supply within the seat structure.

According to a further aspect of the disclosure, the backrest upholstery part and the seat pan upholstery part are configured as one-piece element. This allows an easy manufacturing of the upholstery parts providing a continuous surface and comfort. Additionally, the one-piece upholstery provides continuous weight compensation.

In another embodiment of the upholstery module, the upholstery part comprises a leg-rest upholstery part. For example, the leg-rest upholstery part is detachably connectable to the seat pan upholstery part or to the one-piece upholstery. Exemplary, additional detachable fixing elements can be attached to a front seat pan upholstery side corresponding with fixing elements on a leg-rest side. The additional fixing elements are, for example, mechanical fixing textile strips, so that a bending in an acute angle can be enabled smoothly. Optionally, the leg-rest upholstery part is an integral component of the one-piece element.

A further aspect of the present invention provides the upholstery module with at least one trim cover part which is at least partially surrounding the upholstery part, wherein the trim cover part is detachably mounted to at least one of the upholstery part and the support shell. Thereby, a simplified maintenance and replacement of each component of the upholstery module can be ensured. Further, the trim cover part can be easily separated from the upholstery part in case of replacement or cleaning. For instance, the trim cover part is attached via detachable fixing elements, such as clip elements, textile stripes, fabric hook and look fasteners, to the upholstery part and/or to the support shell. Additionally or optionally, the trim cover part can be detachably attached to the upholstery part by zip fastening elements. The trim cover part may be configured to jointly cover the seat pan upholstery part, the backrest upholstery part and the leg-rest upholstery part. This gives an impression of one-piece upholstery, which provides a more comfortable appearance to a customer and can be cleaned easily. Particularly, the trim cover part is detachably coupled to one of the seat pan frame and the backrest frame in order to enable a non-slipping fitting of the upholstery module on the seat. Furthermore, the trim cover part is made from a textile material and/or leather, and can comprise at least partially soft foam lining. For example, the trim cover part comprises a general thickness of about 1.5 mm to 10 mm, particularly 2 mm to 5 mm.

According to a further embodiment of the upholstery module, the upholstery part comprises a number of comfort layers made of foam material and at least one mesh, and a number of functional elements comprising at least one of a massage device and a thermal conditioning device. In particular, the upholstery part is a cushion foam part. Moreover, the upholstery part is assembled from several foam layers. The seat pan upholstery part, a backrest upholstery part and the leg-rest upholstery part may be respectively made of polyurethane foam. In particular, the comfort layers comprise at least one soft foam layer having a thickness of 10 mm to 30 mm, particularly 20 mm. The soft foam layer can comprise integrated heating elements, such as heating wires. Further, the comforts layers comprise at least one mesh, for example for thermal conditioning, particularly ventilation, of the upholstery module. The mesh is a 3D-mesh, such as a spacer fabric, and can comprise a thickness of 5 mm to 20 mm, particularly 10 mm. Another component of the comfort layers is a foam layer with comfort areas. For example, the foam layer is a hard foam layer and comprising a thickness of 50 mm to 75 mm, particularly 60 mm. The comfort areas can be made of cut-outs or holes, wherein functional elements can be arranged within those cut-outs or holes. Further, the mesh can be inserted into a recess formed in the hard foam layer. Exemplary, a thermal conditioning element, such as a ventilator or a heating element can be arranged within. Thereby, the recess is a through opening from a rear surface side to a front surface side of the corresponding comfort layer. Further, a total height of the upholstery part is about 65 mm to 125 mm, particularly 90 mm to 100 mm. In particular, a total height of the upholstery module comprising the upholstery part and the trim cover part can be about 90 mm to 110 mm, particularly 95 mm.

In another embodiment of the upholstery module, the functional elements of the upholstery part can comprise at least one of suspension springs, valve unit blocks, a lumbar support and a cable and hose fixation. For example, the functional elements are arranged within the hard foam part or one of the other comfort layers.

According to a further embodiment of the upholstery module, the soft foam layer and the hard foam layer can comprise side bolsters providing lateral support to the passenger.

In an embodiment of the upholstery module, the comfort layers are each adhesively bonded to another. Additionally or optionally, the comfort layers can be attached to one another by textile strips at least in a region of the side bolsters.

The disclosure further relates to a seat, in particular to a vehicle seat, such as an aircraft, with an upholstery module as described above.

According to an exemplary embodiment of the seat, the upholstery module is detachably mounted to a seat support structure comprising at least one of a seat pan frame, a backrest frame and a leg-rest frame. For example, the seat pan frame can comprise two lateral seat pan sides; the backrest frame can comprise two lateral backrest sides and the leg-rest frame can comprise two lateral leg-rest sides. In particular, the upholstery module surrounds the lateral sides of each of the seat pan frame, the backrest frame and the leg-rest frame. Thereby, the lateral sides are covered from a view of the passenger and increase an optical appearance. Further, the lateral sides cannot be felt by the passenger, whereby a comfort is increased.

Further scope of applicability of the present invention will become apparent from the detailed description given hereinafter.

### BRIEF DESCRIPTION OF THE DRAWINGS

The present invention will become more fully understood from the detailed description given herein below and the accompanying drawings which are given by way of illustration only, and thus, are not limitative of the present invention, and wherein:
- Figure 1: is a side view of an embodiment of an upholstery module arranged on a seat support structure of a seat for a vehicle, in particular an aircraft,
- Figure 2: is a sectional view of an embodiment of an upholstery part of the upholstery module, detachably mounted to the seat support structure,
- Figures 3A and 3B: are each a perspective view of a further embodiment of the upholstery module and the seat support structure,
- Figures 4A to 4C: are each an exploded view of the upholstery module,
- Figures 5A and 5B: are each an exploded view of an upholstery part of the upholstery module,
- Figures 6A and 6B: are each an exploded view of a support shell of the upholstery module,
- Figure 7: is a perspective view of another embodiment of the upholstery part of the upholstery module,
- Figure 8: is a perspective view of a further possible embodiment of the upholstery module,
- Figure 9: is an exploded view of another embodiment of the upholstery part forming a one-piece element,
- Figure 10: is a sectional view of another embodiment of the upholstery module and
- Figures 11A to 11C: are each a perspective view of an embodiment of the upholstery part forming the one-piece element.

Corresponding parts are marked with the same reference symbols in all figures.

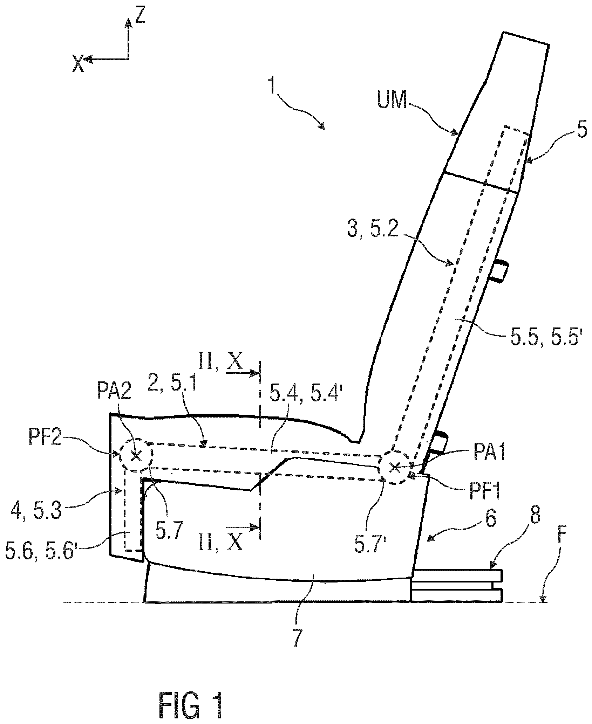

**Figure 1** shows a side view of an embodiment of an upholstery module UM mounted to a seat 1, in particular an aircraft seat. The seat 1 is arranged within a not further shown vehicle, in particular aircraft or any other passenger carrying vehicle. The seat 1 is shown in a taxi, takeoff and landing position, which is further designated as TTL position.

For a better understanding of subsequent descriptions of the seat 1 a coordinate system is shown in further figures. The coordinate system comprises a longitudinal axis x, a transverse axis y and a vertical axis z in relation to an interior space of the vehicle, in which the seat 1 is located.

The seat 1 generally comprises a seat pan 2, a backrest 3 and a leg-rest 4. In one embodiment, the backrest 3 can comprise additionally a shoulder support or a head support. Further, the leg-rest 4 can be extendable. In more detail, the seat 1 comprises a seat support structure 5 such as a seat frame structure. The seat support structure 5 is connected to a base structure 6. Exemplary, the base structure 6 is a structural part fixed on a vehicle floor F. The seat support structure 5 comprises a seat pan frame 5.1 for the seat pan 2. Further, the seat support structure 5 comprises a backrest frame 5.2 for the backrest 3. Moreover, the seat support structure 5 comprises a leg-rest frame 5.3 for the leg-rest 4.

In particular, the seat support structure 5 comprises two lateral seat support sides 5.4, 5.4' for the seat pan frame 5.1. For the backrest frame 5.2, the seat support structure 5 comprises two lateral seat support sides 5.5, 5.5'. Also, the seat support structure 5 comprises two lateral seat support sides 5.6, 5.6' forming the leg-rest frame 5.3. In the shown embodiment, only one of the two lateral seat support sides 5.4 to 5.6' is shown. Additionally, the seat pan frame 5.1, thereby the seat pan 2, comprises a front seat support side 5.7, particularly a front seat pan side, and a back seat support side 5.7', particularly a back seat pan side.

For example, the seat 1 is an adjustable seat 1, wherein at least one not further shown adjusting device is provided for adjusting the backrest 3 relative to the seat pan 2. Further, the leg-rest 4 can be adjusted relative to the seat pan 2.

The backrest frame 5.2 is pivotably mounted to the back seat support side 5.7' of the seat pan frame 5.1. Particularly, the backrest frame 5.2 is pivotably mounted to the seat pan frame 5.1 at a backrest pivot axis PA1, which is understood as an axis parallel to the transverse axis y. Further, the leg-rest frame 5.3 is pivotably mounted to the front seat support side 5.7 of the seat pan frame 5.1. Particularly, the leg-rest frame 5.3 is pivotably mounted to the seat pan frame 5.1 at a leg-rest pivot axis PA2, which is understood as an axis parallel to the transverse axis y.

According to an exemplary embodiment, the backrest frame 5.2 is pivotably connected to the seat pan frame 5.1 by at least one of a backrest pivot fitting PF1 in the backrest pivot axis PA1. The leg-rest frame 5.3 is pivotably connected to the seat pan frame 5.1 by at least one of a leg-rest pivot fitting PF2 in the leg rest pivot axis PA2. For example, each of the pivot fittings PF1, PF2 is provided by a recliner mechanism and thereby comprising recliner fittings. Hence, the seat pan 2, the backrest 3 and the leg-rest 4 can be articulated with respect to each other such that the seat 1 is positionable into at least one of the TTL position, a comfort inclined position and a sleeping position.

The seat pan frame 5.1 is connected to the base structure 6 by a mounting element 7. For example, the mounting element 7 is a fixation bracket. The base structure 6 can comprise a track mechanism 8 for length adjustment of the seat 1.

In another not shown embodiment, the seat support structure 5 can only comprise the backrest frame 5.2 and the seat pan frame 5.1. Further, the seat 1 can be one of a non-adjustable seat 1.

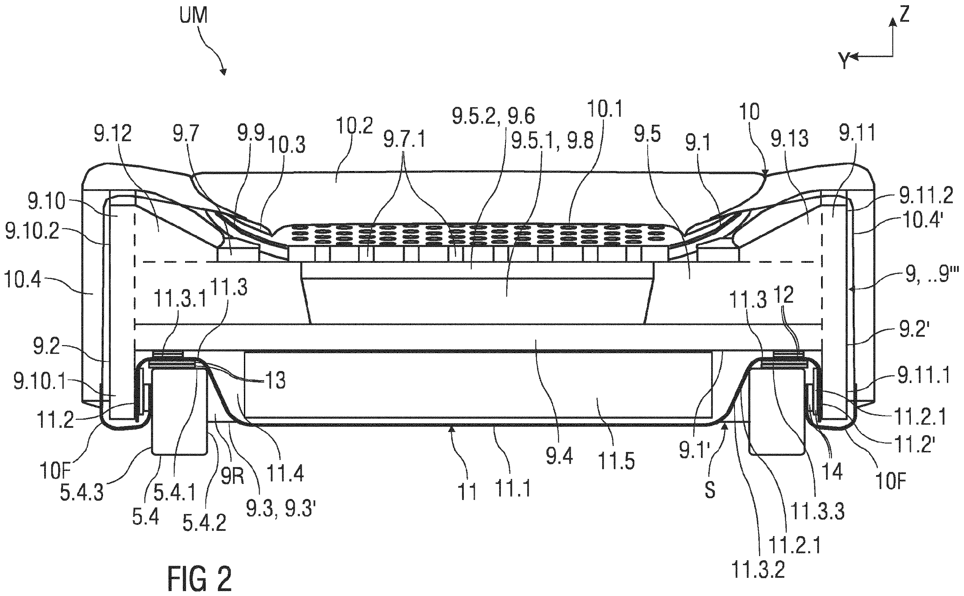

**Figure 2** shows a sectional view of an embodiment of the upholstery module UM. For example, the embodiment shows a sectional view of the upholstery module UM in one of a seat pan region, a backrest region or a leg-rest region.

The upholstery module UM comprises an upholstery part 9. Particularly, the upholstery part 9 is one of a seat pan upholstery part 9' or a backrest upholstery part 9". For example, the seat pan upholstery part 9' provides a comfortable support to a passenger in the seat pan region. The backrest upholstery part 9" provides a comfortable support to the passenger in the backrest region. Further, the upholstery part 9 can comprise a leg-rest upholstery part 9‴ to support the passenger in the leg-rest region. In particular, features of the upholstery part 9 can vary depending on the region it is supporting.

Further, the upholstery module UM comprises a trim cover part 10. The trim cover part 10 may be configured to jointly cover the seat pan upholstery part 9', the backrest upholstery part 9" and the leg-rest upholstery part 9‴. This gives an impression of one-piece upholstery 9, which provides a more comfortable appearance to a customer and can be cleaned easily. Optionally, each of the upholstery parts 9 to 9‴ can be covered by single trim cover parts 10.

The trim cover part 10 is made from a textile material and/or leather, and can comprise at least partially a soft foam lining 10.1. Exemplary, the soft foam lining 10.1, such as a foam lamination, comprises an air permeable material and/or soft foam material. The foam lining 10.1 can be attached, such as laminated to a covering layer 10.2 facing the passenger. The covering layer 10.2 can be made of leather, textile and fabric material.

Furthermore, the trim cover part 10 is arranged on a top surface 9.1 of the upholstery part 9. The trim cover part 10 is partially surrounding the upholstery part 9, at least covering sides of the upholstery part 9 which are facing into a passenger space, in particular which can be seen by the passenger. In the shown embodiment, it can be seen that the top surface 9.1, two lateral side surfaces 9.2, 9.2' and one of a front surface 9.3 or a back surface 9.3' are covered by the trim cover part 10.

For example, the trim cover part 10 can be detachably mounted to the upholstery part 9 enabling a non-slip fit. Therefore, the trim cover part 10 can be detachably mounted to the upholstery part 9 by not further shown detachable fixing strips, such as textile strips and hook and loop fasteners. In particular, the detachable fixing strips can be arranged on the top surface 9.1 and optionally or additionally on the lateral side surfaces 9.2, 9.2' of the upholstery part 9. Corresponding detachable fixing strips can be arranged on a rear cover surface 10.3 and optionally or additionally on lateral cover surfaces 10.4, 10.4'.

Moreover, the upholstery module UM comprises a support shell 11. The support shell 11 is arranged at the rear surface 9.1' of the upholstery part 9. Particularly, the rear surface 9.1' is a surface side which is facing the seat support structure 5, in particular the seat frame structure. The support shell 11 is a thin but stiff back-mounted plate. For example, the support shell 11 is made of synthetic material, carbon fiber and/or metal material, such as a metal sheet.

In the shown embodiment, the support shell 11 is partially embedded in a rear portion of the upholstery part 9. Therefore, the upholstery part 9 comprises a recess 9R in the rear portion such that the support shell 11 is hidden from view of the passenger.

The support shell 11 comprises a center portion 11.1 and two lateral sides 11.2, 11.2'. In particular, each of the lateral sides 11.2, 11.2' are formed as U-shaped portions 11.3 opened towards a rear. Thereby, each of the U-shaped portions 11.3 is opened towards the lateral seat support sides 5.4, 5.4', for example provided by the seat pan frame 5.1. For instance, each of the lateral seat support sides 5.4, 5.4' is arranged within corresponding U-shaped portions 11.3. Particularly, each of the U-shaped portions 11.3 comprises an upper surface 11.3.1 on which the rear surface 9.1' of the upholstery part 9 is supported. Further, each of the U-shaped portions 11.3 comprises a bent edge 11.3.2 which is merged with the center portion 11.1. In particular, the edges 11.3.2 are bent downwards from each of the upper surfaces 11.3.1 towards the center portion 11.1. Thereby, an indentation area 11.4 is formed by the center portion 11.1.

Within the indentation area 11.4, particularly a recessed portion, a comfort element 11.5 is located. Exemplary, the comfort element 11.4 is a foam block. The comfort element 11.5 can act as a suspension element for the upholstery part 9 and so as additional suspension and comfort element for the passenger seated thereon. Particularly, the rear surface 9.1' of the upholstery part 9 is supported on the comfort element 11.5. In particular, the center portion 11.1 so as the indentation area 11.4 is arranged in a space S provided between the two lateral seat support sides 5.4, 5.4', such as of the seat pan frame 5.1.

To provide a non-slip fixation, a simplified assembly and disassembly of the upholstery part 9 and the support shell 11, a number of detachable fixing elements 12 are provided between corresponding surfaces. Thereby, the upholstery part 9 is detachably coupled to the support shell 11. In particular, the fixing elements 12 are arranged on the upper surface 11.3.1 of the support shell 11 and the corresponding fixing elements 12 are arranged on the rear surface 9.1' of the upholstery part 9.

Moreover, the support shell 11 is detachably mounted to the seat support structure 5. In particular, each of the lateral seat support sides 5.4, 5.4', such as of the seat pan frame 5.1, are partially surrounded by the U-shaped portions 11.3. That means that the lateral seat support sides 5.4, 5.4' are partially embedded in an opened space of the U-shaped portions 11.3 to be hidden from the view of the passenger.

Exemplarily, the support shell 11 is detachably mounted to the seat support structure 5 by a number of detachable fixing elements 13. Thereby, the detachable fixing elements 13 are arranged between corresponding surfaces of the support shell 11 and the seat support structure 5. In particular, each of the fixing elements 13 is arranged on a rear surface 11.3.3 of the U-shaped portions 11.3 which is facing the seat support structure 5. Each of the corresponding fixing elements 13 is arranged on a top surface 5.4.1, 5.4.1' of the lateral seat support sides 5.4, 5.4' which is facing towards the rear surface 11.3.3.

The detachable fixing elements 12, 13 can comprise at least one of a mechanical fastening element, such as a textile detachable strip, hook and loop fasteners and clip element, snap-in element or any other mechanical fastening element. Particularly, the detachable fixing elements 13 are slim-shaped such that a comfort and suspension of the upholstery module UM is not affected.

In a not shown embodiment, additionally or optionally each inner side surface 5.4.2 and each outer side surface 5.4.3 of the lateral seat support sides 5.4, 5.4' can comprise detachable fixing elements 13 corresponding with fixing elements 13 arranged on an inner surface 11.2.1 of the lateral sides 11.2, 11.2' of the support shell 11. Thereby, providing additional or optionally detachably mounting of the support shell 11 on the seat support structure 5.

In the shown embodiment, the trim cover part 10 comprises a flap 10F coupled along the lateral cover surfaces 10.4, 10.4'. Optionally, each of the lateral cover surfaces 10.4, 10.4' comprises a separate flap 10F. For example, the flap 10F is formed as an extension element of the lateral cover surfaces 10.4, 10.4'. Further, the flap 10F can be part of the lateral cover surfaces 10.4, 10.4'. Particularly, the flap 10F is bent around the lateral side surfaces 9.2, 9.2' of the upholstery part 9, embedding them.

In the shown embodiment, the flap 10F is bent over the lateral sides 11.2, 11.2' of the support shell 11, enclosing the lateral side surfaces 9.2, 9.2' of the upholstery part 9 and the lateral sides 11.2, 11.2'. In particular, the flap 10F comprises detachable fixing elements 14 which correspond with fixing elements 14 arranged on the inner surface 11.2.1 of the lateral sides 11.2, 11.2'. Thereby, the flap 10F can be enclosed between the inner surface 11.2.1 and the outer side surface 5.4.3 of the seat support structure 5.

In another not shown embodiment, the outer side surface 5.4.3 of the seat support structure 5 can comprise detachable fixing elements 14 corresponding with the detachable fixing elements 14 of the flap 10F.

The upholstery part 9 is formed by a number of stacked comfort layers 9.4 to 9.7. Further, the upholstery part 9 comprises a number of functional elements 9.8, 9.9. For example, the upholstery part 9 is in particular a cushion foam part.

For better understanding of an arrangement of the comfort layers 9.4 to 9.7, the arrangement will be understood as comprising comfort layers 9.4 to 9.7 one above the other in vertical direction.

The comfort layer 9.4 is forming the rear surface 9.1' of the upholstery part 9. Particularly, the comfort layer 9.4 is supported on the comfort element 11.5, such as a foam block, of the support shell 11 and on the U-shaped portions 11.3. For example, the comfort layer 9.4 is made of hard foam material. The comfort layer 9.5 is arranged on the comfort layer 9.4. For example, the comfort layer 9.5 is made of foam material. Both of the comfort layers 9.4, 9.5 are forming a rear portion of the upholstery part 9 providing hardness and stability. Moreover, the detachable fixing elements 12 are attached to the foam comfort layer 9.5 on the rear surface 9.1'. The foam comfort layer 9.5 further comprises recesses 9.5.1, 9.5.2. Thereby, the functional elements 9.8, 9.9 can be each arranged within one of the recesses 9.5.1, 9.5.2. In the shown embodiment, the functional element 9.8 is arranged in the recess 9.5.1. Particularly, the functional element 9.8 is a thermal conditioning device, such as a heating element or ventilation or fan element. Additionally, the foam comfort layer 9.5 comprises side bolsters 9.12, 9.13 extending in the vertical direction towards the passenger. Each of the side bolsters 9.12, 9.13 can be an integral part of the hard foam comfort layer 9.5.

Further, a comfort layer 9.6 having smaller dimensions is arranged within the recess 9.5.2 of the comfort layer 9.5. The comfort layer 9.6 can be a mesh, such as a 3D-mesh and/or spacer fabric. Particularly, the comfort layer 9.6 is made of air permeable material.

Moreover, a comfort layer 9.7 is arranged above the comfort layer 9.5 and overlaying the recesses 9.5.1, 9.5.2. The comfort layer 9.7 is in particular a soft foam layer. For example, the soft foam comfort layer 9.7 comprises a number of holes 9.7.1. Thereby, the holes 9.7.1 can ensure thermal circulation through the upholstery part 9, to the trim cover part 10 and to the passenger seated thereon.

In the shown embodiment, a functional element 9.9 is arranged on the comfort layer 9.7. In particular, the functional element 9.9 is a heating mat. In another embodiment, the functional element 9.9 can be heating elements, such as heating wires integrated within the comfort layer 9.7.

Further, in the shown embodiment, the upholstery part 9 comprises comfort layers 9.10, 9.11 each arranged on a side of the stacked comfort layers 9.4 to 9.7. Thereby, each of the side comfort layers 9.10, 9.11 is forming a lateral border providing lateral softness to the passenger. Therefore, the side comfort layers 9.10, 9.11 can be made of hard foam. Particularly, the side comfort layers 9.10, 9.11 are projecting over a height of the stacked comfort layers 9.4 to 9.7 in both of the vertical directions. Especially, downward projecting portions 9.10.1, 9.11.1 of each of the side comfort layers 9.10, 9.11 are forming a recess 9R, particularly a framing, for partially embedding the support shell 11. Upward projecting portions 9.10.2, 9.11.2 of the side comfort layers 9.10, 9.11 are forming at least a planar surface with the side bolsters 9.12, 9.13.

In a further embodiment, the comfort layers 9.4 to 9.7, 9.10, 9.11 are adhesively bonded to each other. Particularly, the trim cover part 10 is embedding the comfort layers 9.4 to 9.7, 9.10, 9.11 in a fixed manner.

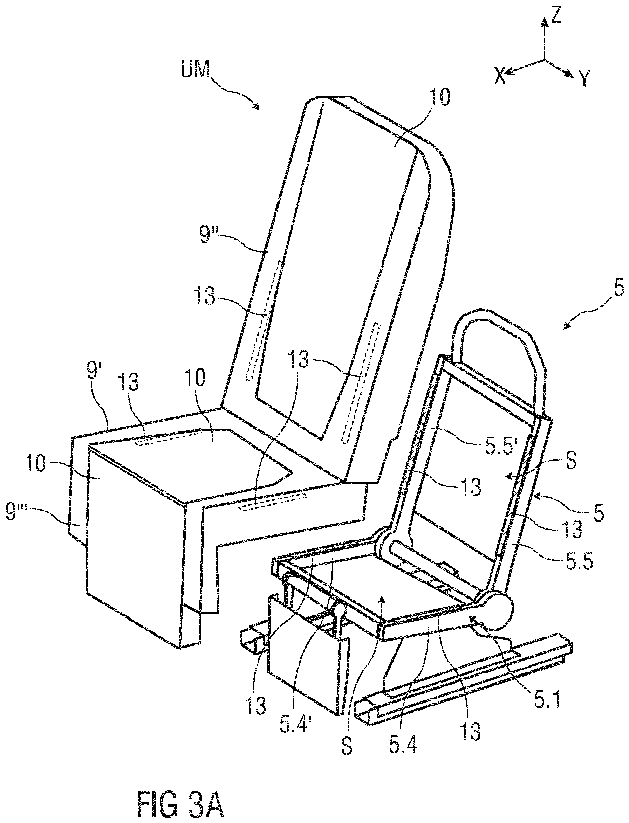

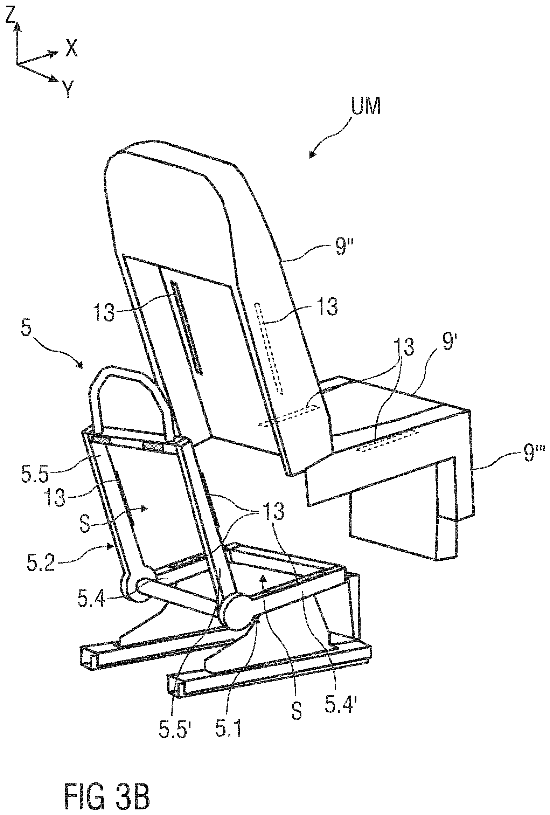

**Figures 3A** **and** **3B** are each a perspective view of a further embodiment of the upholstery module UM and the seat support structure 5.

The upholstery module UM is shown with the seat pan upholstery part 9', the backrest upholstery part 9" and the leg-rest upholstery part 9‴. Each of the upholstery parts 9' to 9‴ is covered by the trim cover part 10.

The seat pan upholstery part 9' is arranged on the seat pan frame 5.1. Particularly, the seat pan upholstery part 9' is detachably mounted to the lateral seat support sides 5.4, 5.4' of the seat pan frame 5.1 via the detachable fixing elements 12.

The backrest upholstery part 9" is arranged on the backrest frame 5.2. Particularly, the backrest upholstery part 9" is detachably mounted to the lateral seat support sides 5.5, 5.5' of the backrest frame 5.2 via the detachable fixing elements 12.

Each of the detachable fixing elements 12 are formed as a strip extending over a length of the corresponding lateral seat support sides 5.4 to 5.5'. For example, the detachable fixing elements 12 can be adhesively bonded or bolted to the support shell 11 and to the seat support structure 5.

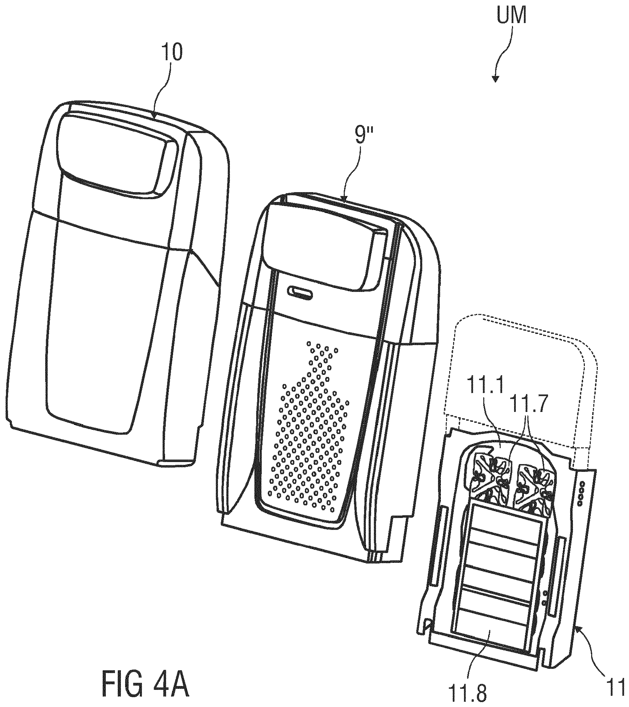

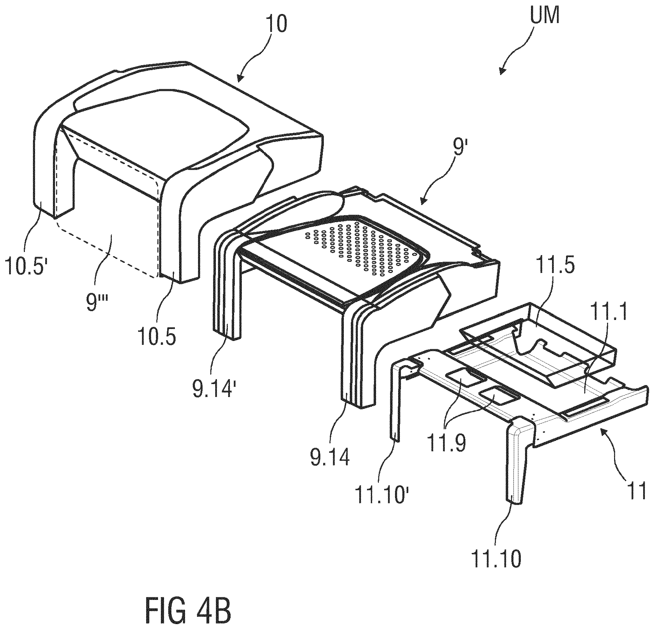

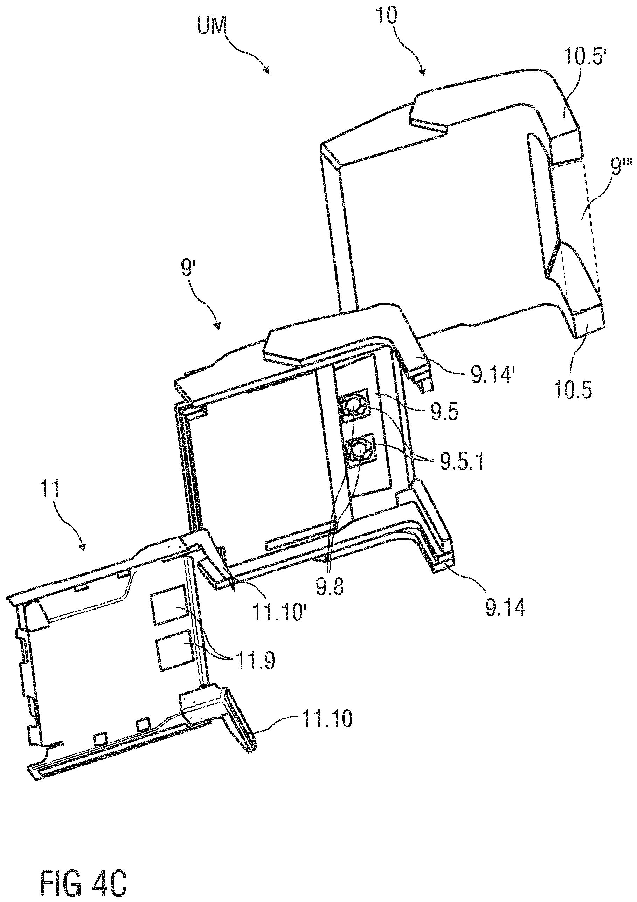

**Figures 4A to 4C** are each an exploded view of the upholstery module UM, wherein **figure 4A** shows the upholstery module UM with the backrest upholstery part 9" and **figures 4B** **and** **4C** show the upholstery module UM with the seat pan upholstery part 9' from different angles.

The support shell 11 of the backrest upholstery part 9" comprises, in the shown embodiment, functional elements 11.7, 11.8 arranged within the center portion 11.1. For example, the functional elements 11.7 are each spring elements providing additional suspension to the backrest upholstery part 9". The functional element 11.8 is, exemplarily a lumbar support.

The support shell 11 of the seat pan upholstery part 9' comprises the comfort element 11.5 arranged in the center portion 11.1. Further, the support shell 11 comprises, in the shown embodiment, two through holes 11.9 which align with the recesses 9.5.1 formed in the foam comfort layer 9.5. Therefore, ensuring operation of each of the functional elements 9.8, such as ventilation devices, arranged within the recesses 9.5.1. Moreover, the support shell 11 comprises two lateral cover sides 11.10, 11.10' extending downwardly from the center portion 11.1. In particular, the lateral cover sides 11.10, 11.10' are arranged on a front side of the center portion 11.1 to align with the lateral seat support sides 5.6, 5.6' of the leg-rest frame 5.3. According to the lateral cover sides 11.10, 11.10' each of the seat pan upholstery part 9' and the trim cover part 11 comprises corresponding lateral cover sides 9.14, 9.14' and 10.5, 10.5'. Thereby, the leg-rest frame 5.3 is covered and hidden from view of the passenger. The leg-rest upholstery part 9‴ can be arranged and, for example, detachably mounted between each of the two corresponding lateral cover sides 11.10, 11.10', 9.14, 9.14' and 10.5, 10.5'.

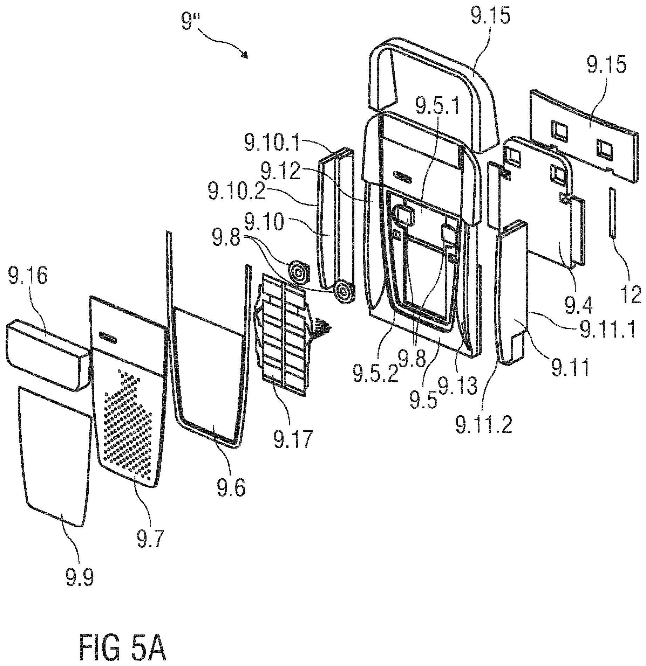

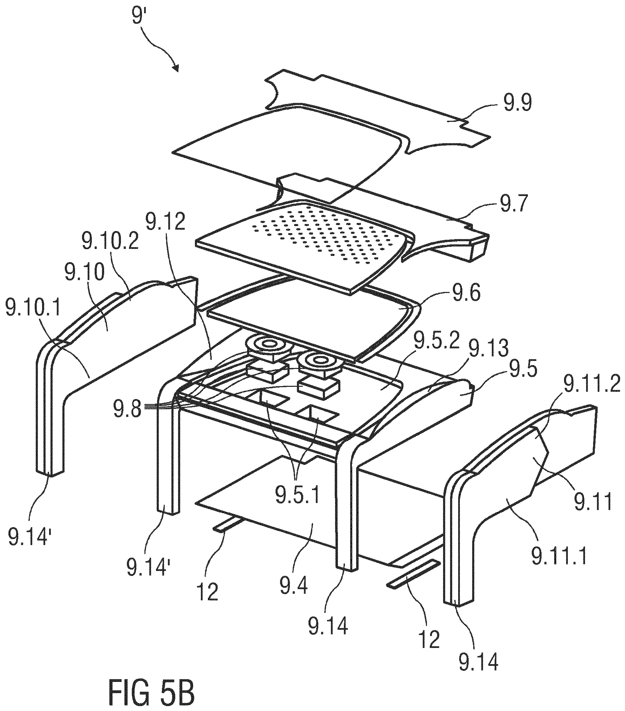

**Figures 5A** **and** **5B** are each an exploded view of the backrest upholstery part 9" and the seat pan upholstery part 9', wherein **figure 5A** shows the backrest upholstery part 9" and **figure 5B** shows the seat pan upholstery part 9'.

As shown in **figure 5A****,** the backrest upholstery part 9" can comprise additional comfort parts 9.15, for example made of foam, attached to the foam comfort layer 9.5 providing additional support and stability. Additionally, another additional comfort part 9.16 is a head cushion arranged on the soft foam comfort layer 9.7. Further, an additional functional element 9.17, such as a massage device and massage cells, can be arranged within the recess 9.5.1 of the foam comfort layer 9.5.

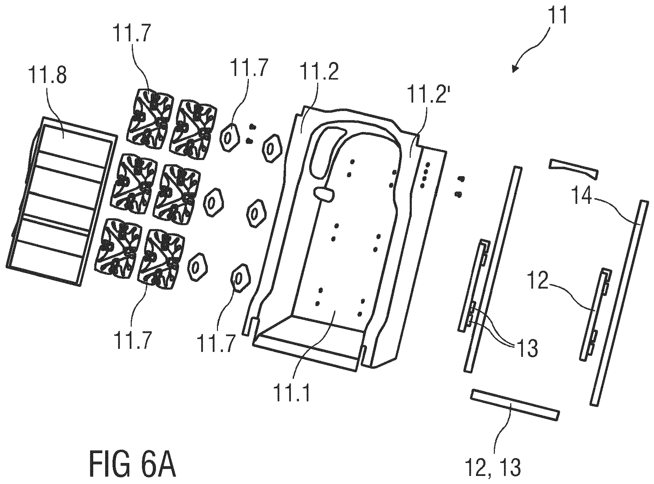

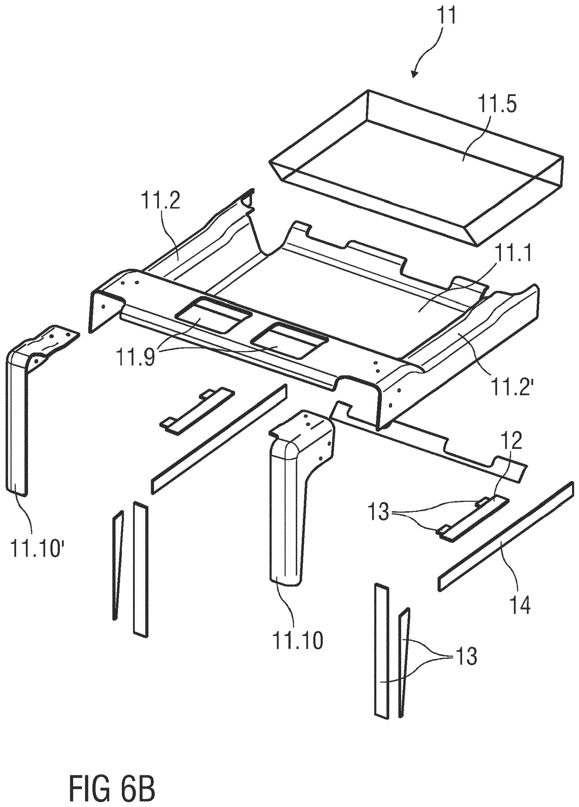

**Figures 6A** **and** **6B** are each an exploded view of the support shell 11, wherein **figure 6A** shows the support shell 11 for the backrest upholstery part 9" and **figure 6B** shows the support shell 11 for the seat pan upholstery part 9'.

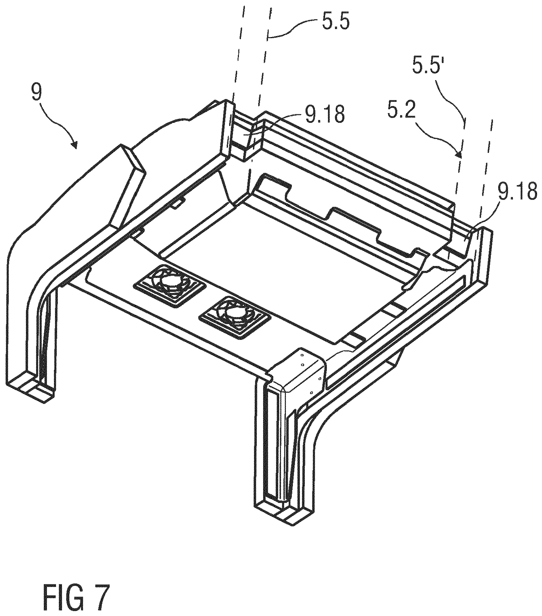

**Figure 7** shows a perspective view of an embodiment of the seat pan upholstery part 9' comprising cut-out portions 9.18 on a back side of the upholstery part 9', particularly facing towards the lateral seat support sides 5.5, 5.5' of the backrest frame 5.2 and partially surrounding them.

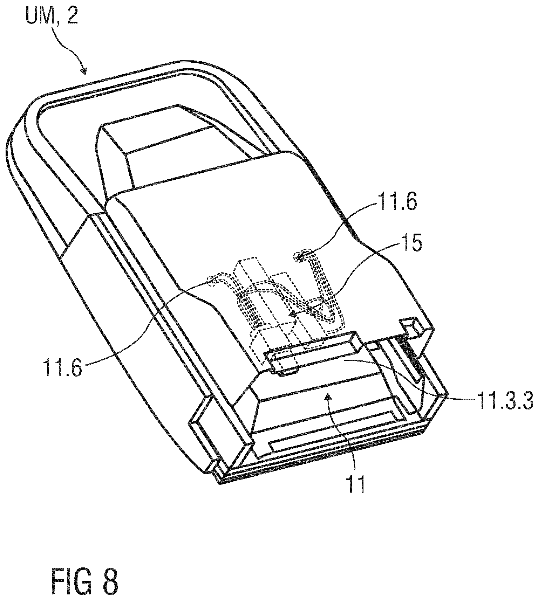

**Figure 8** shows a perspective view of a further possible embodiment of the upholstery module UM, in particular for the backrest 3. As shown, the support shell 11 comprises through holes 11.6 to connect at least one of the functional elements 9.8, 9.9 of the backrest upholstery part 9" or the functional elements 11.7, 11.8 arranged in the support shell 11 with a controlling device 15. The controlling device 15 can be mounted to the rear surface 11.3.3 of the support shell 11. For example, the controlling device 15 is one of a valve device and a pump device. The rear surface 11.3.3 of the support shell 11 and so as the controlling device 15 can be covered by a cover shell 16.

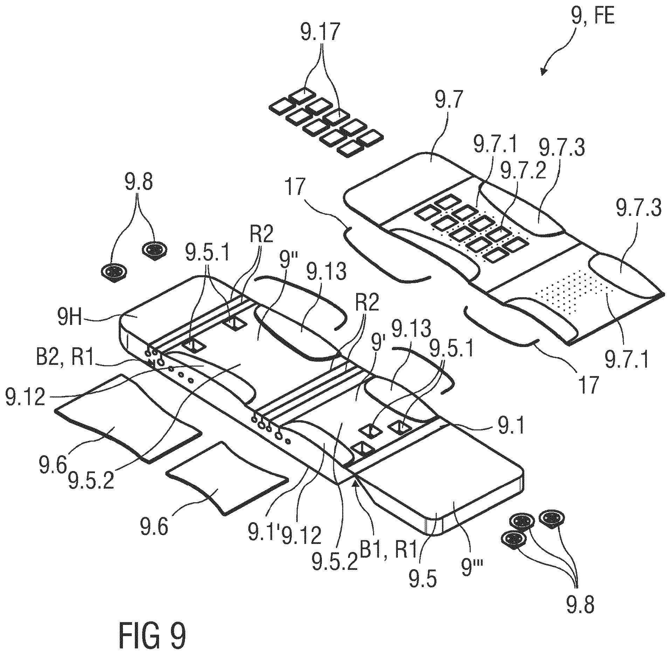

**Figure 9** is an exploded view of another embodiment of the upholstery part 9 of the upholstery module UM. In particular, the upholstery part 9 is a one-piece element FE configured from the seat pan upholstery part 9', the backrest upholstery part 9" and the leg-rest upholstery part 9‴.

The one-piece element FE, particularly one-piece foam element, comprises a number of recesses R1 in bending areas B1, B2 that is arranged between the seat pan upholstery part 9' and the backrest upholstery part 9'; and the backrest upholstery part 9" and a headrest upholstery part 9H. The recesses R1 may be configured as cavities or cut outs that can be formed or milled at the rear surface 9.1' of the upholstery part 9. Further, the one-piece element FE can comprise recesses R2 configured as cut-outs or cavities on a top surface 9.1 which is facing towards the passenger. The recesses R1, R2 are adapted to prepare softer areas within the one-piece foam element to ensure that these areas are easily bendable without affecting the hardness and durability of the one-piece foam element. The soft foam comfort layer 9.7 comprises, in the shown embodiment, a number of recesses 9.7.2, particularly through openings. Thereby, the functional elements 9.17, such as massage cells, can be arranged within the recesses 9.7.2. Furthermore, the soft foam comfort layer 9.7 comprises side bolster areas 9.7.3 formed to align with the side bolsters 9.12, 9.13 of the foam comfort layer 9.5. Hereby, the side bolsters 9.12, 9.13 can be non-slip fitted to the side bolster areas 9.7.3 by textile strips 17, such as fabric strips and hook and loop fasteners. Further features of the foam comfort layer 9.5 and the soft foam comfort layer 9.7 refer to the description of **figure 2****.**

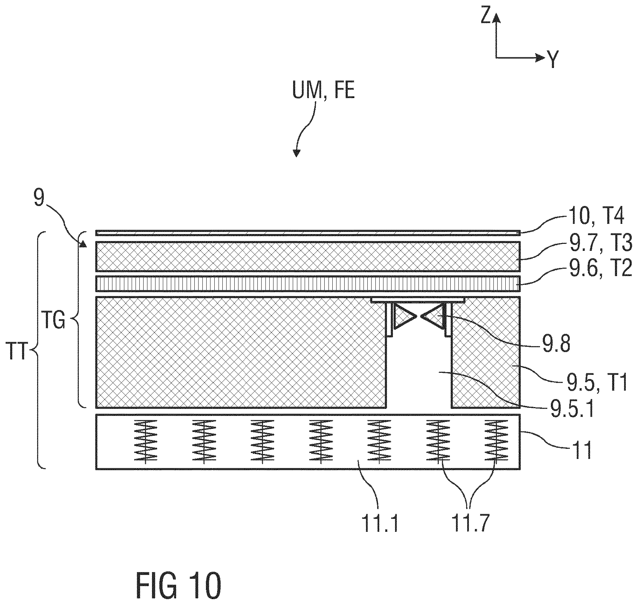

**Figure 10** is a sectional view of the upholstery module UM made of the one-piece element FE.

The upholstery module UM comprises a foam comfort layer 9.5 which exemplarily comprises a thickness T1 of about 60 mm. The foam comfort layer 9.5 comprises the recess 9.5.1, such as a cut-out or through opening portion, in which the functional element 9.8 is arranged. The functional element 9.8 is exemplarily a ventilation, fan device and is arranged on the top surface 9.1 of the foam comfort layer 9.5. Thereby, an air suction path is provided by the recess 9.5.1. Above the foam comfort layer 9.5, the comfort layer 9.6 made of mesh material for air ventilation is arranged. A thickness T2 of the comfort layer 9.6 is about 10 mm. Further, the soft foam comfort layer 9.7 is arranged on the comfort layer 9.6 and having a thickness T3 of about 20 mm. For example, the soft foam comfort layer 9.7 can comprise heating elements. On top of the upholstery part 9, the trim cover part 10 is located. The trim cover part 10 can comprise a thickness T4 of about 2 mm to 5 mm, exemplarily made of leather, synthetic material or fabric. Therefore, a general thickness TG of the upholstery part 9 plus the trim cover part 10 is about 92 mm to 95 mm. On the rear surface 9.1' of the upholstery part 9, the support shell 11 is arranged. The support shell 11 comprises several functional elements 11.7, such as spring and suspension devices, which are positioned within the center portion 11.1. A total thickness TT of the whole upholstery module UM is exemplarily about 132 mm to 135 mm.

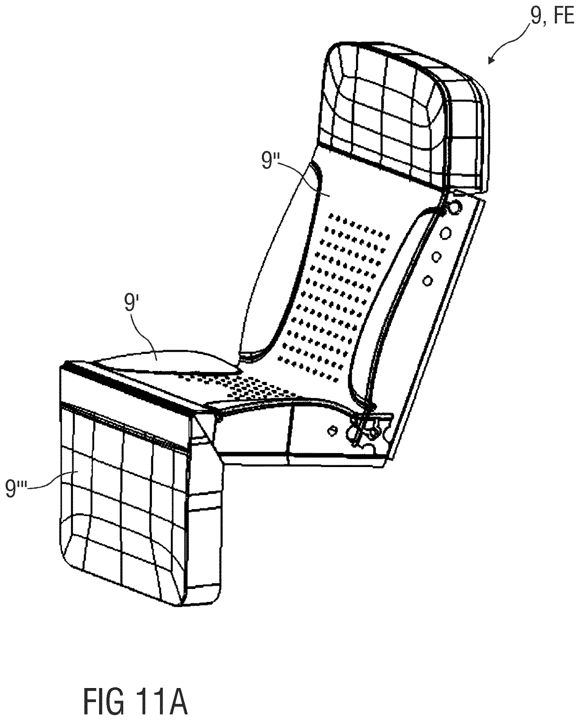

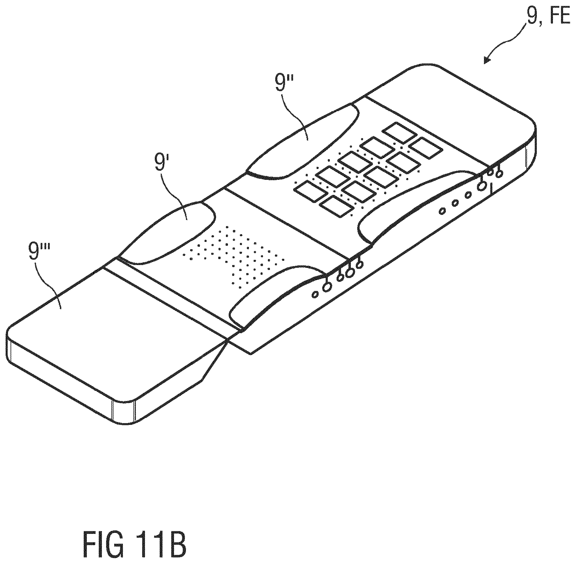

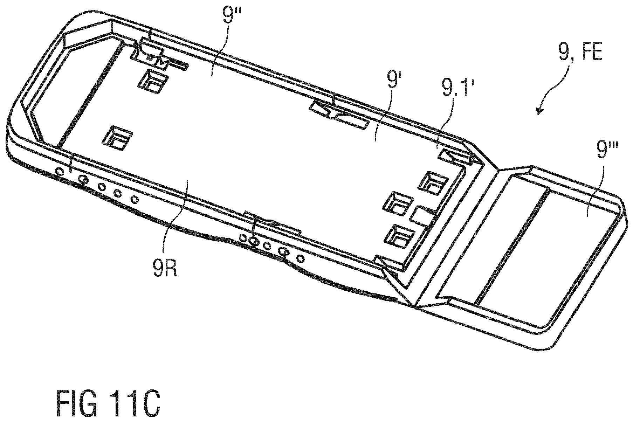

**Figures 11A to 11C** are each a perspective view of the upholstery part 9 forming the one-piece element FE. As seen in **figure 11C****,** showing the rear surface 9.1' of the upholstery part 9, the recess 9R is provided by the rear surface 9.1' such that the support shell 11 and so the seat support structure 5 can be embedded within.

### List of References

- 1: seat
- 2: seat pan
- 3: backrest
- 4: leg-rest
- 5: seat support structure
- 5.1: seat pan frame
- 5.2: backrest frame
- 5.3: leg-rest frame
- 5.4 to 5.6': lateral seat support side
- 5.4.1, 5.4.1': top surface
- 5.4.2: inner side surface
- 5.4.3: outer side surface
- 5.7: front seat support side
- 5.7': back seat support side
- 6: base structure
- 7: mounting element
- 8: track mechanism
- 9 to 9‴: upholstery part
- 9.1: top surface
- 9.1': rear surface
- 9.2, 9.2': side surface
- 9.3: front surface
- 9.3': back surface
- 9.4 to 9.7: comfort layer
- 9.5.1, 9.5.2: recess
- 9.7.1: holes
- 9.7.2: recess
- 9.7.3: bolster area
- 9.8, 9.9: functional element
- 9.10, 9.11: comfort layer
- 9.10.1, 9.11.1, 9.10.2, 9.11.2: projecting portion
- 9.12, 9.13: bolster
- 9.14, 9.14': lateral cover side
- 9.15, 9.16: comfort part
- 9.17: functional element
- 9.18: cut-out portion
- 9H: headrest upholstery part
- 9R: recess
- 10: trim cover part
- 10.1: foam lining
- 10.2: covering layer
- 10.3: rear cover surface
- 10.4, 10.4': lateral cover surface
- 10.5, 10.5': lateral cover side
- 10F: flap
- 11: support shell
- 11.1: center portion
- 11.2, 11.2': lateral side
- 11.2.1: inner surface
- 11.3: U-shaped portion
- 11.3.1: upper surface
- 11.3.2: edge
- 11.3.3: rear surface
- 11.4: indentation area
- 11.5: comfort element
- 11.6: through holes
- 11.7, 11.8: functional element
- 11.9: through hole
- 11.10, 11.10': lateral cover side
- 12, 13, 14: fixing element
- 15: controlling device
- 16: cover shell
- 17: textile strip

- B1, B2: bending area
- F: floor
- FE: one-piece element
- PA1, PA2: pivot axis
- PF1, PF2: fitting
- R1, R2: recess
- S: space
- T1 to T4, TG, TT: thickness
- UM: upholstery module
- x: longitudinal axis
- y: transverse axis
- z: vertical axis

## Claims

1. Upholstery module (UM) for a seat (1), in particular a vehicle seat, such as an aircraft seat, comprising
- at least an upholstery part (9) forming at least one of a backrest upholstery part (9") and a seat pan upholstery part (9'), and
- at least a support shell (11), wherein
- the upholstery part (9) comprises
- a number of stacked comfort layers (9.4 to 9.7) forming a cushion foam part and side bolsters (9.12, 9.13) and
- a number of functional elements (9.8, 9.9, 9.17, 11.7, 11.8) comprising at least one of a massage device, a thermal conditioning device, suspension springs, valve unit blocks, a lumbar support and a cable and hose fixation,
- wherein the upholstery part (9) is detachably coupled on the support shell (11),
- and the support shell (11) is detachably mounted on a seat support structure (5) of the seat (1).

2. Upholstery module (UM) according to claim 1, wherein the upholstery part (9) and the support shell (11) are detachably coupled to each other by a number of detachable fixing elements (12), wherein the fixing elements (12) are arranged between corresponding surfaces of the upholstery part (9) and the support shell (11).

3. Upholstery module (UM) according to claim 1 or 2, wherein the support shell (11) is detachably mounted to the seat support structure (5) by a number of detachable fixing elements (13), wherein the fixing elements (13) are arranged between corresponding surfaces of the support shell (11) and the seat support structure (5).

4. Upholstery module (UM) according to one of the preceding claims, wherein the support shell (11) is partially embedded in a recess (9R) of the upholstery part (9).

5. Upholstery module (UM) according to one of the preceding claims, wherein the support shell (11) comprises a center portion (11.1) and two lateral sides (11.2, 11.2'), wherein each of the two lateral sides (11.2, 11.2') forms bent edges (11.3.2).

6. Upholstery module (UM) according to claim 5, wherein each of the two lateral sides (11.2, 11.2') is formed as U-shaped portion (11.3) which is opened towards a rear.

7. Upholstery module (UM) according to claim 5 or 6, wherein each of the lateral sides (11.2, 11.2') is partially surrounding lateral seat support sides (5.4 to 5.6') of the seat support structure (5).

8. Upholstery module (UM) according to one of the claims 5 to 7, wherein the center portion (11.1) comprises an indentation area (11.4), wherein at least one of a comfort element (11.5) and functional element (11.7, 11.8) is arranged within the indentation area (11.4).

9. Upholstery module according to claim 8, wherein the indentation area (11.4) is arranged in a space (S) between the lateral seat support sides (5.4 to 5.6').

10. Upholstery module (UM) according to one of the preceding claims, wherein the support shell (11) comprises a number of through holes (11.9) to connect at least one of the functional elements (9.8, 9.9, 9.17, 11.7, 11.8, 11.7, 11.8) of the upholstery part (9) and the support shell (11) with at least one controlling device (15).

11. Upholstery module (UM) according to one of the preceding claims, wherein at least the backrest upholstery part (9") and the seat pan upholstery part (9') are configured as one-piece element (FE).

12. Upholstery module (UM) according to one of the preceding claims, wherein the upholstery part (9) comprises a leg-rest upholstery part (9‴).

13. Upholstery module (UM) according to one of the preceding claims, wherein at least one trim cover part (10) is provided at least partially surrounding the upholstery part (9), wherein the trim cover part (10) is detachably mounted to at least one of the upholstery part (9) and the support shell (11).

14. Upholstery module (UM) according to one of the preceding claims, wherein the upholstery part (9) comprises comfort layers (9.4 to 9.7) made of foam material and mesh material.

15. A seat (1), in particular a vehicle seat, such as an aircraft seat, comprising an upholstery module (UM) according to claims 1 to 14, wherein the upholstery module (UM) is detachably mounted to a seat support structure (5) comprising at least one of a seat pan frame (5.1), a backrest frame (5.2) and a leg-rest frame (5.3).

## Patentansprüche

1. Polstermodul (UM) für einen Sitz (1), insbesondere einen Fahrzeugsitz wie beispielsweise einen Flugzeugsitz, das Folgendes umfasst:
- mindestens ein Polsterteil (9), das mindestens eines von einem Rückenlehnenpolsterteil (9") und einem Sitzschalenpolsterteil (9') bildet, und
- mindestens eine Trägerschale (11), wobei
- das Polsterteil (9) Folgendes umfasst:
- eine Anzahl übereinander angeordneter Komfortschichten (9.4 bis 9.7), die ein Polsterschaumteil und Seitenwangen (9.12, 9.13) bilden, und
- eine Anzahl von Funktionselementen (9.8, 9.9, 9.17, 11.7, 11.8), die aus mindestens einem der folgenden Elemente bestehen: einem Massagegerät, einem Thermokonditioniergerät, einer Federung, Ventilbloöcken, einer Lordosenstütze und einer Kabel- und Schlauchfixierung,
- wobei das Polsterteil (9) lösbar an der Trägerschale (11) gekoppelt ist, und
- die Trägerschale (11) lösbar an einer Sitztragstruktur (5) des Sitzes (1) montiert ist.

2. Polstermodul (UM) nach Anspruch 1, wobei das Polsterteil (9) und die Trägerschale (11) durch eine Anzahl lösbarer Befestigungselemente (12) lösbar miteinander gekoppelt sind, wobei die Befestigungselemente (12) zwischen entsprechenden Oberflächen des Polsterteils (9) und der Trägerschale (11) angeordnet sind.

3. Polstermodul (UM) nach Anspruch 1 oder 2, wobei die Trägerschale (11) durch eine Anzahl lösbarer Befestigungselemente (13) lösbar an der Sitztragstruktur (5) befestigt ist, wobei die Befestigungselemente (13) zwischen entsprechenden Flächen der Trägerschale (11) und der Sitztragstruktur (5) angeordnet sind.

4. Polstermodul (UM) nach einem der vorhergehenden Ansprüche, wobei die Trägerschale (11) teilweise in einer Vertiefung (9R) des Polsterteils (9) eingebettet ist.

5. Polstermodul (UM) nach einem der vorhergehenden Ansprüche, wobei die Trägerschale (11) einen Mittelteil (11.1) und zwei laterale Seiten (11.2, 11.2') umfasst, wobei die beiden lateralen Seiten (11.2, 11.2') jeweils gebogene Kanten (11.3.2) bilden.

6. Polstermodul (UM) nach Anspruch 5, wobei jede der beiden lateralen Seiten (11.2, 11.2') als nach hinten geöffneter U-förmiger Abschnitt (11.3) ausgebildet ist.

7. Polstermodul (UM) nach Anspruch 5 oder 6, wobei jede der lateralen Seiten (11.2, 11.2') laterale Sitzträgerseiten (5.4 bis 5.6') der Sitztragstruktur (5) teilweise umgibt.

8. Polstermodul (UM) nach einem der Ansprüche 5 bis 7, wobei der Mittelabschnitt (11.1) einen Einbuchtungsbereich (11.4) aufweist, wobei innerhalb des Einbuchtungsbereichs (11.4) mindestens eines von einem Komfortelement (11.5) und einem Funktionselement (11.7, 11.8) angeordnet ist.

9. Polstermodul nach Anspruch 8, wobei der Einbuchtungsbereich (11.4) in einem Raum (S) zwischen den lateralen Sitzträgerseiten (5.4 bis 5.6') angeordnet ist.

10. Polstermodul (UM) nach einem der vorhergehenden Ansprüche, wobei die Trägerschale (11) eine Vielzahl von Durchgangslöchern (11.9) zum Anschließen mindestens eines der Funktionselemente (9.8, 9.9, 9.17, 11.7, 11.8, 11.7, 11.8) des Polsterteils (9) und der Trägerschale (11) mit mindestens einer Steuereinrichtung (15) umfasst.

11. Polstermodul (UM) nach einem der vorhergehenden Ansprüche, wobei zumindest das Rückenlehnenpolsterteil (9") und das Sitzschalenpolsterteil (9') als einteiliges Element (FE) ausgebildet sind.

12. Polstermodul (UM) nach einem der vorhergehenden Ansprüche, wobei das Polsterteil (9) ein Beinauflagepolsterteil (9‴) umfasst.

13. Polstermodul (UM) nach einem der vorhergehenden Ansprüche, wobei mindestens ein das Polsterteil (9) zumindest teilweise umgebendes Bezugsteil (10) vorgesehen ist, wobei das Bezugsteil (10) lösbar an dem Polsterteil (9) und/oder der Trägerschale (11) befestigt ist.

14. Polstermodul (UM) nach einem der vorhergehenden Ansprüche, wobei das Polsterteil (9) Komfortschichten (9.4 bis 9.7) aus Schaumstoff und Netzmaterial umfasst.

15. Sitz (1), insbesondere Fahrzeugsitz wie beispielsweise ein Flugzeugsitz mit einem Polstermodul (UM) nach den Ansprüchen 1 bis 14, wobei das Polstermodul (UM) lösbar an einer Sitztragstruktur (5) montiert ist, die zumindest eines von einem Sitzschalenrahmen (5.1), einem Rückenlehnenrahmen (5.2) und einem Beinstützenrahmen (5.3) umfasst.

## Revendications

1. Module de rembourrage (UM) pour un siège (1), notamment un siège de véhicule tel qu'un siège d'aéronef, comprenant :
- au moins une partie de rembourrage (9) formant au moins une partie de rembourrage de dossier (9") et/ou une partie de rembourrage d'assise (9'), et
- au moins une armature de support (11),
ladite partie de rembourrage (9) comprenant
- un certain nombre de couches de confort (9.4 à 9.7) empilées formant une partie de coussin en mousse et des traversins latéraux (9.12, 9.13), et
- un certain nombre d'éléments fonctionnels (9.8, 9.9, 9.17, 11.7, 11.8) comprenant un dispositif de massage, un dispositif de conditionnement thermique, des ressorts de suspension, des blocs de valves, un support lombaire et/ou et une fixation pour câbles et tuyaux, ladite partie de rembourrage (9) étant couplée détachable avec l'armature de support (11), et
ladite armature de support (11) étant montée détachable sur une structure de support (5) dudit siège (1).

2. Module de rembourrage (UM) selon la revendication 1, dans lequel la partie de rembourrage (9) et l'armature de support (11) sont couplées détachables l'une à l'autre grâce à un certain nombre d'éléments de fixation (12) détachables, lesdits éléments de fixation (12) étant agencés entre des surfaces correspondantes de la partie de rembourrage (9) et de l'armature de support (11).

3. Module de rembourrage (UM) selon la revendication 1 ou 2, dans lequel l'armature de support (11) est montée détachable sur la structure de support de siège (5) grâce à un certain nombre d'éléments de fixation (13) détachables, lesdits éléments de fixation (13) étant agencés entre des surfaces correspondantes de l'armature de support (11) et de la structure de support de siège (5).

4. Module de rembourrage (UM) selon l'une quelconque des revendications précédentes, dans lequel l'armature de support (11) est partiellement incorporée dans un renfoncement (9R) de la partie de rembourrage (9).

5. Module de rembourrage (UM) selon l'une quelconque des revendications précédentes, dans lequel l'armature de support (11) comprend une section centrale (11.1) et deux bords latéraux (11.2, 11.2'), chacun desdits deux bords latéraux (11.2, 11.2') formant des bords pliés (11.3.2).

6. Module de rembourrage (UM) selon la revendication 5, dans lequel chacun des deux bords latéraux (11.2, 11.2') est constitué sous la forme d'une partie en U (11.3) ouverte vers l'arrière.

7. Module de rembourrage (UM) selon la revendication 5 ou 6, dans lequel chacun des bords latéraux (11.2, 11.2') entoure partiellement des bords latéraux de support de siège (5.4 à 5.6') de la structure de support de siège (5).

8. Module de rembourrage (UM) selon l'une quelconque des revendications 5 à 7, dans lequel la section centrale (11.1) comprend une zone en cuvette (11.4), un élément de confort (11.5) et/ou un élément fonctionnel (11.7, 11.8) étant agencés dans ladite zone en cuvette (11.4).

9. Module de rembourrage selon la revendication 8, dans lequel la zone en cuvette (11.4) est agencée dans un espace (S) entre les bords latéraux de support de siège (5.4 à 5.6').

10. Module de rembourrage (UM) selon l'une quelconque des revendications précédentes, dans lequel l'armature de support (11) comprend un certain nombre de trous traversants (11.9) permettant de relier au moins un des éléments fonctionnels (9.8, 9.9, 9.17, 11.7, 11.8, 11.7, 11.8) de la partie de rembourrage (9) et l'armature de support (11) à au moins un dispositif de commande (15).

11. Module de rembourrage (UM) selon l'une quelconque des revendications précédentes, dans lequel la partie de rembourrage de dossier (9") et la partie de rembourrage d'assise (9') au moins sont conçues sous la forme d'un élément unitaire (FE).

12. Module de rembourrage (UM) selon l'une quelconque des revendications précédentes, dans lequel la partie de rembourrage (9) comprend une partie de rembourrage de repose-jambe (9‴).

13. Module de rembourrage (UM) selon l'une quelconque des revendications précédentes, dans lequel il est prévu au moins une partie de parure (10) qui entoure au moins partiellement la partie de rembourrage (9), ladite partie de parure (10) étant montée détachable sur la partie de rembourrage (9) et/ou l'armature de support (11).

14. Module de rembourrage (UM) selon l'une quelconque des revendications précédentes, dans lequel la partie de rembourrage (9) comprend des couches de confort (9.4 à 9.7) réalisées dans un matériau de mousse et un matériau à mailles.

15. Siège (1), notamment siège de véhicule tel qu'un siège d'aéronef, comprenant un module de rembourrage (UM) selon les revendications 1 à 14, dans lequel le module de rembourrage (UM) est monté détachable à la structure de support de siège (5), qui comprend au moins un châssis parmi un châssis d'assise (5.1), un châssis de dossier (5.2) et un châssis de repose-jambe (5.3).
